# EUROPÄISCHE PATENTANMELDUNG

(11) **EP 0 917 324 A2**
(43) Veröffentlichungstag der Anmeldung: **19.05.1999**
(21) Anmeldenummer: 98121195.6
(22) Anmeldetag: 13.11.1998
(51) Int. Cl.: H04L 25/02, B60R 16/00

(54) **Empfangschaltung für ein CAN-System**

(30) Priorität: 13.11.1997 DE 19750317
(71) Anmelder: STMicroelectronics GmbH, 85630 Grasbrunn (DE)
(72) Erfinder: Erckert, Ricardo, D 83043 Bad Aibling (DE)
(74) Vertreter: Hirsch, Peter

(57) **Zusammenfassung**

Empfangsschaltung für ein CAN- (Controlled Area Network)-System mit digitaler Datenübertragung über einen Doppelleitungsbus mit paralleler, redundanter Impulssignalübertragung über zwei Leitungen (CANH, CANL) eines Doppelleitungsbusses mit einer Komparatorschaltungsanordnung (COMP1a, COMP1b) zur differentiellen Auswertung der beiden über die zwei Leitungen (CANH, CANL) jeweils empfangenen Impulssignale unter Offsetspannungsüberlagerung bezüglich des über eine (CANL) der beiden Leitungen (CANH, CANL) empfangenen Impulssignals vor der differentiellen Auswertung, wobei die Komparatorschaltungsanordnung (COMP1a, COMP1b) dem zweiten Impulssignal sowohl eine positive Offsetspannung (+offset) als auch eine negative Offsetspannung (-offset) überlagert und zwischen die Ausgangsseite der Komparatorschaltungsanordnung und den Signalausgang (RxD) eine bistabile Kippschaltung (FF) geschaltet ist.

## Beschreibung

Die Erfindung betrifft eine Empfangsschaltung für ein CAN-System. Dabei steht CAN für Controlled Area Network. Ein solches Netzwerk ist für Automobile vorgesehen und umfaßt eine Mehrzahl von Sendern und Empfängern, die mittels eines Busleitungssystems miteinander verbunden sind. Damit lassen sich Steuersysteme, Sensoren, Meßwertgeber, Meßwertempfänger, Steuersignalempfänger, Stelleinrichtungen usw. miteinander verknüpfen.

Aus Sicherheitsgründen wird bei einem bevorzugten CAN-System eine digitale Datenübertragung über einen Doppelleitungsbus mit zwei Leitungen durchgeführt, wobei die zu übertragenden Impulssignale gleichzeitig über beide Leitungen übertragen werden und dabei hinsichtlich ihrer Impulszeiten und Impulslängen gleichlaufend, jedoch logikwertmäßig gegenläufig sind. Auf diese Weise ist eine Übertragungsredundanz geschaffen, die auch bei etlichen Fehlerzuständen des Bussystems eine fehlerfreie Datenübertragung gewährleistet. Solche Fehler sind Leitungsunterbrechungen, Leitungskurzschlüsse hin zur Batteriespannung oder zu Masse und wechselseitige Kurzschlüsse zwischen den beiden Leitungen des Doppelleitungsbusses.

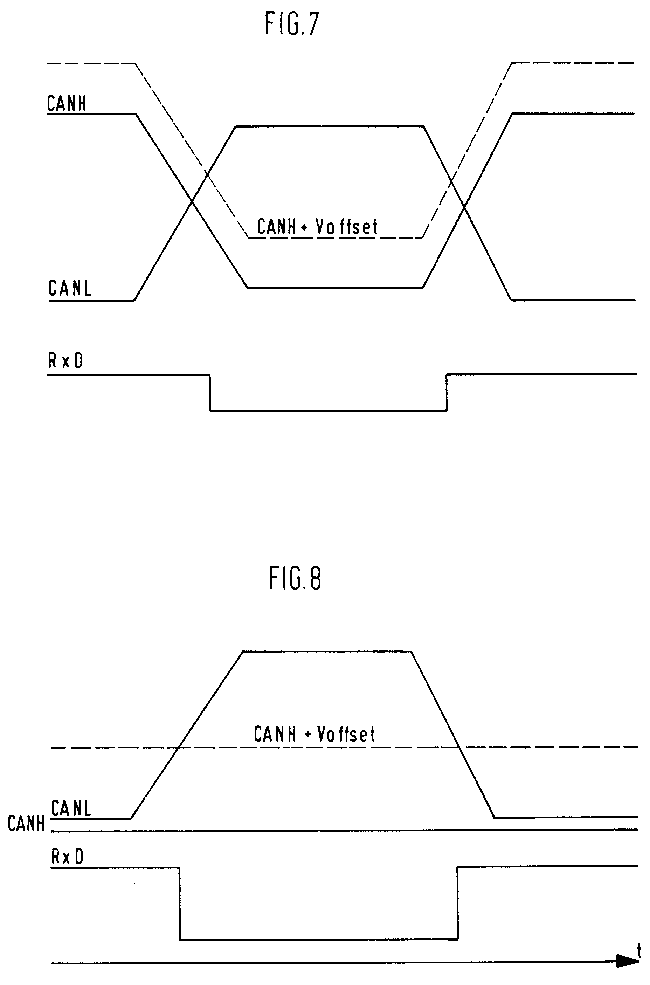

Eine bekannte Empfangsschaltung mit einem solchen Doppelleitungsbussystem ist beispielsweise in Form der integrierten Schaltung PCA82C252 von Philips bekannt. Fig. 6 zeigt in Blockschaltbilddarstellung die hier interessierenden wesentlichen Komponenten dieser bekannten Empfangsschaltung. Diese weist zwei Anschlüsse für die Verbindung mit einer ersten Leitung CANH bzw. zur Verbindung mit einer zweiten Leitung CANL des Doppelleitungsbusses auf. CANH ist über eine Offsetspannungsquelle Voffset mit einem nicht invertierenden Eingang eines Komparators COMP1 und CANL ist direkt mit einem invertierenden Eingang des Komparators COMP1 verbunden. Voffset überlagert dem über CANH eingehenden Impulssignal eine Offsetspannung von +2,8V. Das über CANH eingehende Impulssignal wird außerdem nicht invertierenden Eingängen von Komparatoren COMP2 und COMP4 zugeführt. Das über CANL eingehende Impulssignal wird einem nicht invertierenden Eingang eines Komparators COMP3 und einem invertierenden Eingang eines Komparators COMP5 zugeführt. Die invertierenden Eingänge von COMP2 und COMP3 sind mit einer Referenzspannungsquelle REF1 verbunden, die diesen invertierenden Eingängen eine Referenzspannung von + 5V zuführt. Mittels einer Referenzspannungsquelle REF2 wird dem invertierenden Eingang von COMP4 und dem nicht invertierenden Eingang von COMP5 eine Referenzspannung von +2,8V zugeführt.

Die Ausgänge der Komparatoren COMP1, COMP4 und COMP5 sind mit drei verschiedenen Eingängen einer Umschalteinrichtung SW verbunden, die ausgangsseitig mit einem Ausgangsanschluß RxD der Empfangsschaltung verbunden ist. Die Umschaltung der Umschalteinrichtung SW steht unter Steuerung einer Multiplexsteuerlogikschaltung MUX, die einen mit dem Ausgang von COMP2 verbundenen ersten Eingang E1, einen mit dem Ausgang von COMP3 verbundenen zweiten Eingang E2 und einen dritten Eingang E3 aufweist. E3 ist mit dem Ausgang eines Timers T verbunden, dessen Eingang mit der Ausgangsseite der Umschalteinrichtung SW verbunden ist.

Die Arbeitsweise dieser bekannten Empfangsschaltung wird nun unter Zuhilfenahme der Fig. 7 bis 9 erläutert. Dabei werden acht Betriebsmöglichkeiten betrachtet, die von dem Zustand des Doppelleitungsbusses abhängen, nämlich:
- Fall 1:: die Leitungen CANH und CANL arbeiten korrekt
- Fall 2:: die Leitung CANH ist unterbrochen
- Fall 3:: die Leitung CANL ist unterbrochen
- Fall 4:: die Leitung CANH ist zur Batterie hin kurzgeschlossen
- Fall 5:: die Leitung CANL ist zu Masse hin kurzgeschlossen
- Fall 6:: die Leitung CANH ist zu Masse hin kurzgeschlossen
- Fall 7:: die Leitung CANL ist zur Batterie hin kurzgeschlossen
- Fall 8:: die Leitungen CANL und CANH sind miteinander kurzgeschlossen

Die Arbeitsweise der Empfangsschaltung wird nun für diese Fälle kurz betrachtet. In den Fig. 7 bis 9 sind jeweils das Impulssignal auf CANL, das Impulssignal auf CANH, gestrichelt das Impulssignal von CANH erhöht um +Voffset und das an RxD entstehende Ausgangssignal der Empfangsschaltung dargestellt. Der Kürze und Einfachheit halber sind die einzelnen Signale nur mit den Namen der zugehörigen Leitungen bzw. Anschlüsse bezeichnet.

Es wird nun die Arbeitsweise der bekannten Empfangsschaltung gemäß Fig. 6 für die acht genannten Fälle kurz erläutert.

### Fall 1:

Die zugehörigen Signalverläufe sind in Fig. 7 dargestellt. Sobald das Potential von CANL den Wert von CANH+Voffset erreicht, wechselt das Ausgangssignal der Empfangsschaltung von einem hohen zu einem niedrigen Logikwert. Wenn CANL danach CANH + Voffset wieder unterschreitet, wechselt der Ausgang der Empfangsschaltung von einem niedrigen zu einem hohen Logikwert. Somit wird der in CANH enthaltene Dateninhalt auf den Ausgang der Empfangsschaltung abgebildet.

### Fall 2:

Wenn die Leitung CANH unterbrochen ist, erscheint am entsprechenden Eingangsanschluß der Empfangsschaltung ein niedriger Logikwert. Dies deshalb, weil den mit CANH und CANL verbundenen Eingängen der Empfangsschaltung Querwiderstände vorausgehen, welche CANH mit Masse und CANL mit der positiven Spannung +5V, welche den Potentialwert des hohen Logikwertes darstellt, verbindet. Ist die Leitung CANH unterbrochen, ist der entsprechende Eingangsanschluß der Empfangsschaltung daher über den zugehörigen Querwiderstand mit Masse verbunden.

Das zugehörige Signaldiagramm in Fig. 8 zeigt, daß bei diesem Fall das Potential von CANH konstant auf einem niedrigen Wert und somit CANH+Voffset auf einem entsprechend erhöhten konstanten Wert bleiben. Da das Impulssignal von CANL weiterhin den durch CANH+Voffset gebildeten Schwellenwert überschreitet und dann wieder unterschreitet, entsteht am Ausgangsanschluß RxD weiterhin ein brauchbares und korrektes Impulssignal.

### Fall 3:

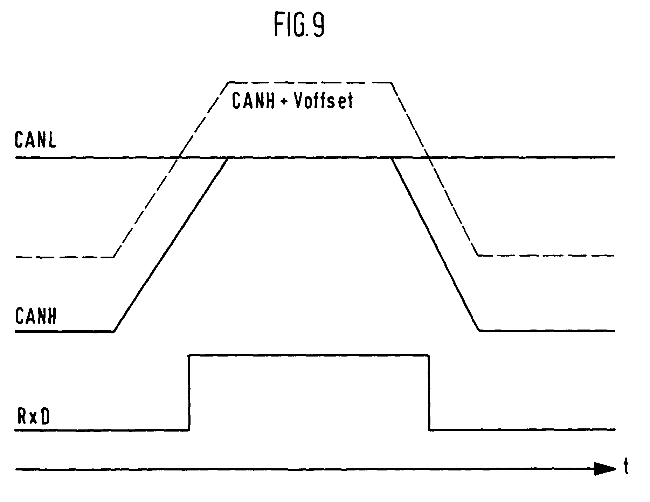

Ist die Leitung CANL unterbrochen, wird der entsprechende Eingangsanschluß der Empfangsschaltung über den zugehörigen Querwiderstand auf +5V angehoben und dieser Spannungswert dem invertierenden Eingang des Komparators COMP1 konstant zugeführt. Dies ist in dem Signaldiagramm in Fig. 9 dargestellt. Da der konstante Potentialwert von CANL in diesem Fall den Potentialverlauf CANH + Voffset kreuzt, entsteht am Ausgangsanschluß RxD ein Impulssignal, welches die Information des über CANH eingegangenen Impulssignals enthält und lediglich gegenüber dem ausgangsseitigen Impulssignal invertiert ist, das man für die Fälle 1 und 2 erhält.

### Fall 4:

Ein Kurzschluß von CANH hin zu einer Spannung von mehr als 5V wird mit Hilfe des Komparators COMP2 festgestellt. Das bei einer solchen Feststellung an dessen Ausgang auftretende Signal bewirkt über die Multiplexlogiksteuerschaltung MUX ein Umschalten der Umschalteinrichtung SW auf den Ausgang des Komparators COMP5. Die Empfangsschaltung arbeitet nun in einem Einleitungsbetrieb unter Verwendung des über CANL hereinkommenden Impulssignals und unter der Entscheidung, ob dieses Impulssignal größer oder kleiner als die Referenzspannung von 2,8V ist.

### Fall 5:

Wenn CANL nach Masse hin kurzgeschlossen ist, führt dies zu einem permanenten dominanten Spannungspegel am Ausgang RxD, also zu einem Spannungspegel, der permanent niedriger ist als der Schaltschwellenwert CANH+Voffset, also die Summe aus der über CANH hereinkommenden Impulssignalspannung und der Offsetspannung. Da das CAN-Protokoll einen Logikwertwechsel der übertragenen Impulssignale spätestens nach einer vorbestimmten Zeitdauer nach Beginn des jeweiligen Impulses vorschreibt, ist der Zustand, daß am Ausgang RxD kein Logikwertwechsel mehr auftritt, ein Verstoß gegen das CAN-Protokoll. Zur Überwachung eines solchen Verstoßes ist der Timer T vorgesehen. Wenn dieser nach einer bestimmten Verzögerungszeit keinen Logikwertwechsel am Ausgang RxD feststellt, steuert der Timer T über die Multiplexlogiksteuerschaltung MUX ein Umschalten der Umschalteinrichtung SW derart, daß RxD mit dem Ausgang von COMP4 verbunden wird, ab da also nur noch ein Einleitungsbetrieb unter Auswertung der über CANH hereinkommenden Impulssignale stattfindet. Bis der Timer angesprochen und eine Umschaltung auf diesen Einleitungsbetrieb bewirkt hat, sind jedoch übertragene Daten ins Leere gelaufen. Es ist daher erforderlich, daß diese Daten von der Sendestelle erneut übertragen werden. Dies bedeutet, daß senderseitig immer eine bestimmte Menge der abgesendeten Daten gespeichert werden muß, um für diesen Fehlerfall deren erneutes Senden an die Empfangsschaltung zu ermöglichen.

### Fall 6:

Ein Kurzschluß von CANH nach Masse führt zu denselben Verhältnissen und demselben Signaldiagramm, wie es in Fig. 8 gezeigt ist. D. h., auch in diesem Fall findet noch eine korrekte Datenübertragung statt.

### Fall 7:

Wenn CANL zur Batteriespannung hin kurzgeschlossen ist, wird dies mit Hilfe von COMP3 festgestellt, was über MUX zur Umschaltung der Umschalteinrichtung SW führt, derart, daß RxD mit dem Ausgang von COMP4 verbunden wird. Es findet dann ein Einleitungsbetrieb unter Ausnutzung des über CANH eingegangenen Impulssignals statt, was wieder eine korrekte Datenübertragung ermöglicht.

### Fall 8:

Ein Kurzschluß zwischen CANH und CANL führt zu einem permanenten dominanten Zustand. D. h., es findet am Ausgang RxD der Empfangsschaltung kein Logikwertwechsel mehr statt. Dies wird wie bei Fall 5 mittels des Timers T festgestellt. Da dieser permanent dominante Zustand auch vom Sender festgestellt wird, wird senderseitig auf Einleitungsbetrieb unter Verwendung von CANH umgeschaltet, während CANL senderseitig offengelassen wird, potentialmäßig also floatet. Da die Feststellung dieses Fehlers mit Verzögerung erfolgt, muß auch in diesem Fall eine erneute Datenübertragung durchgeführt werden, mit der Notwendigkeit, die gesendeten Daten jeweils für eine vorbestimmte Zeitdauer zu speichern.

Mit der Erfindung soll eine Empfangsschaltung verfügbar gemacht werden, bei welcher im Fehlerfall 5, also bei Kurzschluß der Leitung CANL zu Masse hin, kein Datenverlust auftritt, wenn senderseitig keine Datenspeicherung stattfindet.

Eine Lösung dieser Aufgabe ist in Anspruch 1 angegeben und kann gemäß den Ansprüchen 2 bis 7 vorteilhaft weitergebildet werden.

Eine erfindungsgemäße Empfangsschaltung ist hinsichtlich der Komparatoren COMP2 bis COMP5, der Multiplexsteuerlogikschaltung MUX und der Umschalteinrichtung SW gleich aufgebaut wie die in Fig. 6 gezeigte bekannte Schaltung. Die erfindungsgemäße Empfangsschaltung weist gegenüber der bekannten Empfangsschaltung im wesentlichen folgende Unterschiede auf:
1. Die Komparatorschaltung COMP1 der bekannten Empfangsschaltung ist ersetzt durch eine Komparatorschaltungsanordnung, die dem über eine der beiden Leitungen eingehenden Impulssignal sowohl eine positive als auch eine negative Offsetspannung überlagert und zwei Komparatorausgänge aufweist. Dabei liefert ein erster dieser Komparatorausgänge einen ersten Logikpotentialwert dann, wenn das Impulssignal ohne Offsetüberlagerung einen höheren ersten Schwellenwert übersteigt, der dem um die positive Offsetspannung erhöhten Potentialwert des anderen Impulssignals entspricht ansonsten einen zweiten Logikpotentialwert. Der zweite Komparatorausgang liefert den ersten Logikpotentialwert dann, wenn das Impulssignal ohne Offsetüberlagerung einen niedrigeren zweiten Schwellenwert übersteigt, der dem um die negative Offsetspannung verringerten Potentialwert des anderen Impulssignals entspricht, ansonsten den zweiten Logikpotentialwert.
2. Zwischen diese Komparatorschaltungsanordnung und den Signalausgang ist eine bistabile Kippschaltung geschaltet, die durch einen Übergang des ersten und/oder der zweiten Komparatorausgangs in den ersten Logikpotentialwert in einen Setzzustand und durch einen Übergang des ersten und/oder der zweiten Komparatorausgangs in den zweiten Logikpotentialwert in einen Rücksetzzustand schaltbar ist.

Die erfindungsgemäße Schaltung arbeitet in den Fällen 1 bis 4 und 6 bis 8 gleichermaßen wie die bekannte Empfangsschaltung. Eine unterschiedliche Arbeitsweise ergibt sich im Fall 5, also bei Kurzschluß von CANL nach Masse. In diesem Fehlerfall bleibt die erfindungsgemäße Schaltung verzögerungsfrei und korrekt funktionsfähig, so daß kein Datenverlust auftreten kann und für diesen Fehlerfall auch keine senderseitige Speicherung abgesendeter Daten erforderlich ist.

Bei einer bevorzugten Ausführungsform der Erfindung besteht die Komparatorschaltungsanordnung, welche anstelle von COMP1 der bekannten Schaltung vorgesehen ist, aus zwei Komparatoren, deren invertierende Eingänge mit einer Leitung des Doppelleitungsbusses direkt und deren nicht invertierende Eingänge je über eine Offsetspannungsquelle mit der anderen Leitung des Doppelleitungsbusses verbunden sind. Dadurch wird dem über eine Leitung eingehenden Impulssignal sowohl eine positive als auch eine negative Offsetspannung überlagert. Von den beiden Komparatoren wird daher festgestellt, wenn das Impulssignal ohne Offsetüberlagerung den höheren ersten Schwellenwert bzw. den niedrigeren zweiten Schwellenwert übersteigt.

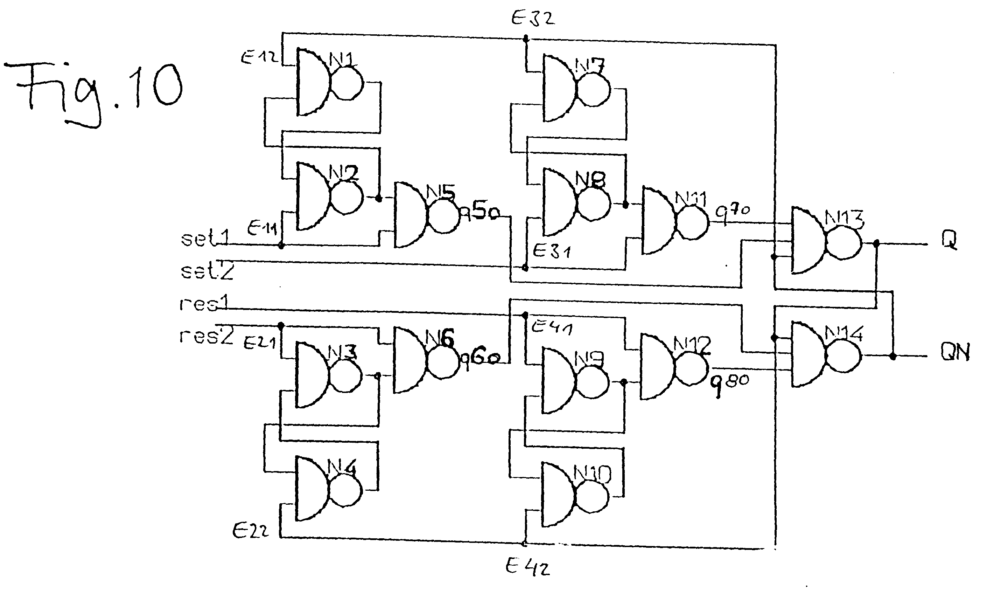

Als bistabile Kippschaltung ist bei einer bevorzugten Ausführungsform der Erfindung ein dynamisches RS-Flipflop mit zwei auf Flankenanstieg reagierenden Setzeingängen und zwei auf Flankenabfall reagierenden Rücksetzeingängen vorgesehen. Dabei sind einer der beiden Setzeingänge und einer der beiden Rücksetzeingänge je mit dem ersten Komparatorausgang und der zweite Setzeingang und der zweite Rücksetzeingang mit dem zweiten Komparatorausgang verbunden. Hierfür eignet sich eine Flipflopschaltung, wie sie nachfolgend anhand von Fig. 10 erläutert wird.

Standard-RS-Flipflops mit statischen Eingängen sind mit dem Nachteil behaftet, daß dem Setzeingang und dem Rücksetzeingang keine das Setzen bzw. Rücksetzen aktivierenden Impulse zugeführt werden dürfen, die sich zeitlich überlappen. Wird dem Rücksetzeingang ein ihn aktivierender Impuls zugeführt, bevor der den Setzeingang gerade aktivierende Impuls beendet ist, kommt es zu einem undefinierten oder nicht sinnvollen Betriebszustand eines solchen Flipflops.

Erfindungsgemäß wird ein dynamisches RS-Flipflop verwendet. Bei diesem ist es erlaubt, dem Rücksetzeingang einen ihn aktivierenden Impuls zuzuführen, bevor der den Setzeingang aktivierende Impuls zu Ende ist, oder umgekehrt. Unerlaubte Zustände wie bei dem statischen RS-Flipflop gibt es bei dem dynamischen RS-Flipflop nicht. Ein solches dynamisches RS-Flipflop kann man mit mehreren Setzeingängen und mehreren Rücksetzeingängen versehen und betreiben.

Da es bei der Auswertung der über die beiden Leitungen eingehenden Impulssignale mittels der beiden Komparatoren der Komparatorschaltungsanordnung zu einer Überlappung der an den Ausgängen der beiden Komparatoren auftretenden Impulse kommt, wäre für die bistabile Kippschaltung der erfindungsgemäßen Empfangsschaltung ein statisches Standard-RS-Flipflop ungeeignet. Bevorzugt ist daher eine bistabile Kippschaltung in Form eines dynamischen RS-Flipflops.

Die Erfindung wird nun anhand einer bevorzugten Ausführungsform näher erläutert. In den Zeichnungen zeigen:
- Fig. 1: eine Ausführungsform einer erfindungsgemäßen Empfangsschaltung;
- Fig. 2 bis 5: Signalverläufe für verschiedene Betriebszustände der erfindungsgemäßen Empfangsschaltung;
- Fig. 6: die bereits erläuterte herkömmliche Empfangsschaltung;
- Fig. 7 bis 9: Signalverläufe für verschiedene Betriebsbedingungen der herkömmlichen Empfangsschaltung; und
- Fig. 10: ein Ausführungsbeispiel für eine dynamische Flipflopschaltung, wie sie bei erfindungsgemäßen Empfangsschaltungen verwendet werden kann.

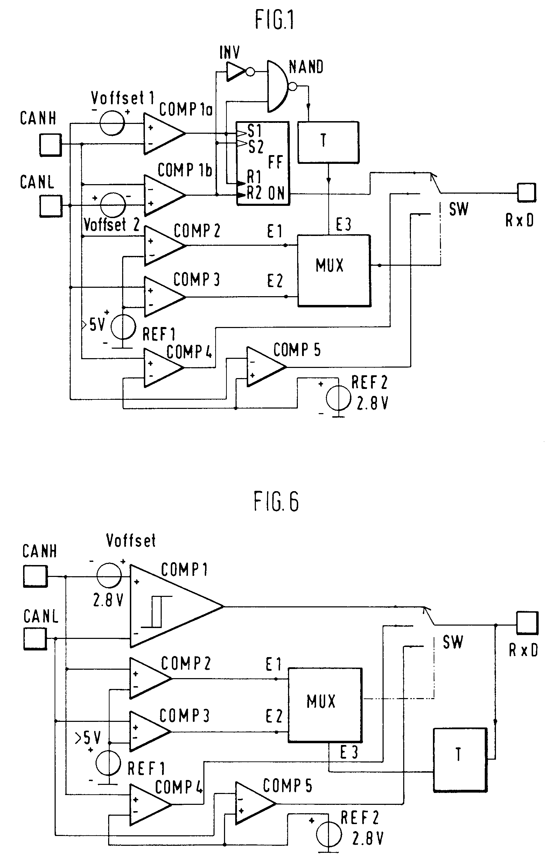

Wie bereits erwähnt worden ist, stimmt die erfindungsgemäße Empfangsschaltung zum Teil mit der herkömmlichen Empfangsschaltung überein. Vergleicht man die Fig. 1 und 6, sieht man, daß die erfindungsgemäße Schaltung gemäß Fig. 1 hinsichtlich der Komparatoren COMP2 bis COMP5, der Multiplexsteuerlogikschaltung MUX und der Umschalteinrichtung SW sowie hinsichtlich der Referenzspannungsquellen für COMP2 bis COMP5 übereinstimmt. Eine weitere Übereinstimmung besteht hinsichtlich des Timers T und dessen Verbindung mit MUX, wobei allerdings das Eingangssignal für den Timer an anderer Stelle gewonnen wird als bei der herkömmlichen Schaltung.

Soweit Übereinstimmung zwischen den Fig. 1 und 6 besteht, wird für gleiche Schaltungskomponenten die gleiche Bezeichnung verwendet und kann auf die im Zusammenhang mit Fig. 6 insoweit bereits gegebenen Erläuterungen verwiesen werden.

Anstelle des einen Komparators COMP1 der herkömmlichen Empfangsschaltung nach Fig. 6 weist die in Fig. 1 gezeigte Ausführungsform einer erfindungsgemäßen Empfangsschaltung zwei Komparatoren COMP1a und COMP1b auf. Jeder dieser beiden Komparatoren besitzt einen nicht invertierenden Komparatoreingang +, einen invertierenden Komparatoreingang - und einen Komparatorausgang. Die nicht invertierenden Eingänge dieser beiden Komparatoren COMP1a und COMP1b sind beide mit der Leitung CANH des Doppelleitungsbusses direkt verbunden. Die nicht invertierenden Eingänge von COMP1a und COMP1b sind je über eine Offsetspannungsquelle Voffset1 bzw. Voffset2 mit der zweiten Leitung CANL des Doppelleitungsbusses verbunden. Wie die Polaritätszeichen für diese beiden Offsetspannungsquellen zeigen, wird dem über CANL eingehenden Impulssignal VCANL mittels Voffset1 eine positive Offsetspannung und mittels Voffset2 eine negative Offsetspannung überlagert.

Auf die beiden Komparatoren COMP1a und COMP1b folgt ein dynamisches RS-Flipflop FF mit zwei Setzeingängen S1 und S2, die auf Anstiegsimpulsflanken reagieren, und zwei Rücksetzeingängen R1 und R2, die auf abfallende Impulsflanken reagieren. S1 und R1 sind mit dem Ausgang von COMP1a und S2 und R2 sind mit dem Ausgang von COMP1b verbunden. Ein Invert-Ausgang QN des Flipflops FF ist mit einer Eingangsleitung der Umschalteinrichtung SW verbunden.

Die Ausgänge von COMP1a und COMP1b sind außerdem mit zwei Eingängen einer NAND-Verknüpfungsschaltung verbunden, und zwar der Ausgang von COMP1a direkt und der Ausgang von COMP1b über einen Inverter INV. Der Ausgang von NAND ist mit einem Signaleingang SE des Timers T verbunden.

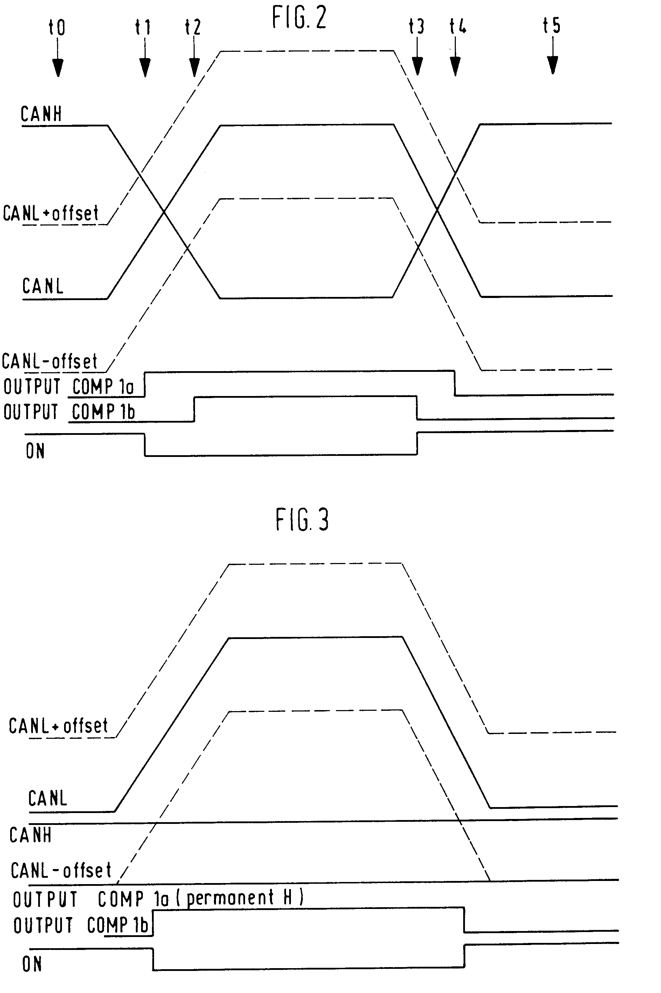

Die Wirkungsweise der in Fig. 1 gezeigten Ausführungsform einer erfindungsgemäßen Schaltung wird nun anhand der Betrachtung der acht bereits im Zusammenhang mit Fig. 6 erläuterten Betriebsfälle und unter Zuhilfenahme der Signalverläufe in den Fig. 2 bis 5 betrachtet.

Der Einfachheit halber sind die einzelnen Signalverläufe auch dieser Figuren lediglich mit der Leitung oder dem Schaltungspunkt, wo sie auftreten, bezeichnet.

### Fall 1:

In diesem Fall arbeiten beide Leitungen CANH und CANL ungestört und findet der Normalbetrieb der Empfangsschaltung statt. Die zugehörigen Signalverläufe sind in Fig. 2 gezeigt. Darin ist zu sehen, daß die über CANH und CANL eingehenden Signalverläufe hinsichtlich ihrer Impulszeiten und Impulslängen gleichlaufend, jedoch logikwertmäßig gegenläufig oder invertiert sind. Daß dem Signalverlauf an CANL sowohl eine positive Offsetspannung (in den Fig. 2 bis 5 kurz +offset genannt) und eine negative Offsetspannung (in diesen Figuren kurz - offset genannt) überlagert ist, führt dazu, daß sich für den Signalverlauf an CANH zwei Schwellenwerte ergeben, nämlich ein höherer erster Schwellenwert, in den Figuren mit CANL + offset bezeichnet, und ein niedrigerer Schwellenwert, in den Figuren mit CANL-offset bezeichnet. Diese Schwellenwerte sind in den Figuren gestrichelt gezeichnet und sind entsprechend dem Verlauf des Impulssignals an CANL veränderlich.

In Fig. 2 sind sechs Zeitpunkte t0 bis t5 angegeben. Zum Zeitpunkt t0 befinden sich die Impulssignale von CANH und CANL auf hohem bzw. niedrigem Logikpotentialwert und ist das Potential an CANH höher als CANL+offset und CANL-offset. An den Ausgängen von COMP1a und COMP1b tritt daher je ein niedriges Logikwertpotential auf. Das Flipflop FF ist nicht gesetzt, so daß an seinem Ausgang QN ein hoher Logikpotentialwert auftritt.

Zur Zeit t1 schneidet der Signalverlauf von CANH in Unterschreitungsrichtung den Signalverlauf CANL + offset. Der Ausgang von COMP1a geht daher zu einem hohen Logikpotentialwert (im folgenden nur noch kurz H genannt) über. Der Ausgang von COMP1b bleibt auf niedrigem Logikpotentialwert (im folgenden kurz L genannt). Die Anstiegsflanke am Ausgang von COMP1a setzt das Flipflop FF über den ersten Setzeingang S1, so daß dessen Ausgang QN von H auf L abfällt. Über die Umschalteinrichtung SW gelangt das Ausgangssignal des Ausgangs QN auf den Ausgang RxD, an dem somit derselbe Signalverlauf wie am Ausgang QN des Flipflop FF auftritt.

Zum Zeitpunkt t2 durchläuft das Impulssignal von CANH in Unterschreitungsrichtung den unteren zweiten Schwellenwert, definiert durch den Verlauf von CANL-offset. Daher geht nun auch der Ausgang von COMP1b von L nach H über. Da das Flipflop bereits zum Zeitpunkt t1 über den ersten Setzeingang S1 gesetzt worden ist, führt dies zu keiner Änderung des Schaltzustandes von FF.

Zur Zeit t3 durchläuft der Signalverlauf von CANH wieder den durch CANL-offset gebildeten unteren Schwellenwert in Überschreitungsrichtung, weswegen der Ausgang von COMP1b von H auf L zurückgeht. Die dabei entstehende abfallende Impulsflanke bewirkt über den zweiten Rücksetzeingang R2 ein Rücksetzen des Flipflop FF und somit einen Übergang an dessen Ausgang QN und am Empfangsschaltungsausgang RxD von L nach H.

Zum Zeitpunkt t4 durchläuft der Signalverlauf von CANH in Überschreitungsrichtung auch den durch CANL+offset definierten oberen Schwellenwert, was zu einem Übergang des Ausgangs von COMP1a von H nach L führt. Dies hat keinen Einfluß auf den Schaltzustand von FF, da dieses bereits zum Zeitpunkt t3 rückgesetzt worden ist.

Zum Zeitpunkt t5 hat die Empfangsschaltung wieder den gleichen Zustand erreicht, den sie zum Zeitpunkt t0 inne hatte.

Im normalen Betriebsfall führt die Empfangsschaltung gemäß Fig. 1 zu dem gleichen Arbeitsergebnis wie die herkömmliche Schaltung gemäß Fig. 6, mit der Ausnahme, daß die Impulsbreite der am Empfangsschaltungsausgang RxD entstehenden Impulse genauer ist als im Fall der Empfangsschaltung gemäß Fig. 6.

### Fall 2:

Bei einer Unterbrechung der Leitung CANH wird der Signalverlauf an CANH konstant auf L herabgezogen, wie bereits im Zusammenhang mit Fig. 6 erläutert worden ist. Dies führt zu einem Signalverlauf, wie er in Fig. 3 dargestellt ist. CANH bleibt konstant auf niedrigem Potential L. Es kommt jedoch immer noch zu Überschreitungen und Unterschreitungen des durch CANL-offset definierten unteren Schwellenwertes und damit zu einem Potentialwechsel am Ausgang von COMP1b und dadurch zu einem abwechselnden Setzen und Rücksetzen des Flipflop FF über den zweiten Setzeingang S2 bzw. den zweiten Rücksetzeingang R2. Obwohl das Ausgangssignal von COMP1a nicht mehr wechselt, reicht das Ausgangssignal von COMP1b aus, um an QN und RxD ein korrektes Impulssignal zu erzeugen.

### Fall 3:

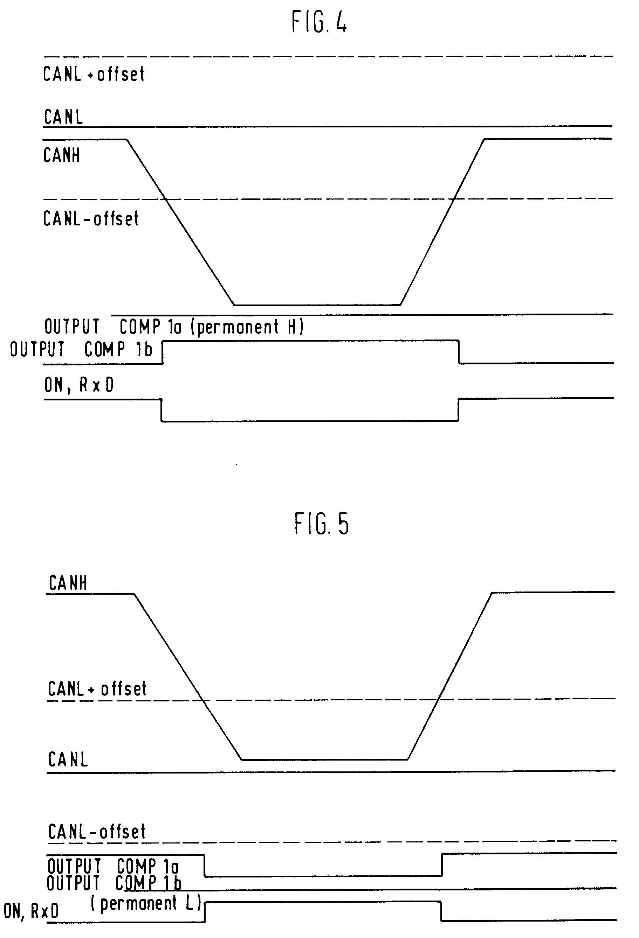

Eine Unterbrechung von CANL führt, wie bereits im Zusammenhang mit Fig. 6 erläutert, zu einem konstanten Spannungswert von 5V an dem mit CANL verbundenen Eingang der Empfangsschaltung. Die zugehörigen Signalverläufe sind in Fig. 4 dargestellt. Demgemäß kommt es weiterhin zu Unterschreitungen und Überschreitungen des durch CANL-offset definierten unteren Schwellenwertes durch das Impulssignal an CANH und zu einem Wechsel zwischen L und H am Ausgang von COMP1b und dadurch wiederum zu einem korrekten Impulssignal an QN und an RxD.

### Fall 4:

Ein Kurzschluß von CANH zur Batterie hin wird wie im Fall der herkömmlichen Empfangsschaltung behandelt. D. h., dieser Kurzschluß mit der Batteriespannung von beispielsweise 12 Volt wird vom Komparator COMP2 festgestellt, was zur Umschaltung der Umschalteinrichtung SW auf den Ausgang des Komparators COMP5 führt und zu einem Einleitungsbetrieb unter Auswertung nur des Signalverlaufs an CANL. Auch in diesem Fall wird ein korrekter Betrieb sichergestellt.

### Fall 5:

Ein Kurzschluß von CANL nach Masse hin führt zu einem Signalverhalten, das zu dem in Fig. 4 gezeigten Signalverhalten komplementär und in Fig. 5 dargestellt ist. Es kommt in diesem Fall zu Unterschreitungen und Überschreitungen des durch CANL+offset definierten oberen Schwellenwertes durch CANH und zu einem entsprechenden Logikwertwechsel zwischen L und H am Ausgang von COMP1a. Dies reicht aus, um das Flipflop FF entsprechend umzuschalten und an QN und an RxD einen korrekten Impulsverlauf zu erzeugen.

In diesem Fall, der von der herkömmlichen Schaltung nicht bewältigt werden kann sondern mit Hilfe des Timers nach einer bestimmten Zeitverzögerung als fehlerhafter Betrieb gemeldet wird, kann eine erfindungsgemäße Schaltung korrekt weiterarbeiten. Es gibt keinen Datenverlust, es wird daher keine erneute Datenübertragung vom Sender her erforderlich und es bedarf daher auch keiner Datenspeicherung auf der Senderseite.

### Fall 6:

Ein Kurzschluß von CANH nach Masse führt zu dem gleichen Signalverlauf wie bei Fall 2, also zu dem Signalverlauf gemäß Fig. 3. Auch in diesem Fall arbeitet die Empfangsschaltung korrekt weiter.

### Fall 7:

Ein Kurzschluß von CANL zur Batterie hin wird wie bei der herkömmlichen Empfangsschaltung mittels des Komparators COMP3 festgestellt. In diesem Fall wird über MUX und SW der Empfangsschaltungsausgang RxD mit dem Ausgang von COMP4 verbunden und damit auf Einleitungsbetrieb unter Auswertung des über CANH eingehenden Impulssignals umgeschaltet. An RxD erscheint daher ein korrektes Impulssignal.

### Fall 8:

Sind CANH und CANL miteinander kurzgeschlossen, führt dies zu einem permanenten H am Ausgang von COMP1a, während COMP1b permanent auf L bleibt. Dies führt am Ausgang von NAND und somit am Steuereingang SE des Timers T zu einem permanenten L und wird vom Timer T festgestellt. Es können nun die gleichen Maßnahmen ergriffen werden wie bei der herkömmlichen Empfangsschaltung.

Die erfindungsgemäße Schaltung erlaubt eine korrekte Datenübertragung ohne das wiederholte Senden von Datenblöcken im Fall 5, in welchem CANL nach Masse hin kurzgeschlossen ist. Das Auftreten eines Fehlers in den Fällen 2, 3, 5, 6 und 8 kann schneller festgestellt werden als im Fall der herkömmlichen Empfangsschaltung. Die herkömmliche Empfangsschaltung bleibt betriebsfähig, erkennt die Fälle 2 und 6 jedoch nicht als Fehler. Daher kann auch kein Fehlersignal abgegeben werden, das zur Überprüfung des CAN-Systems auffordert.

Im Fall 8 wird das Auftreten eines Fehlers von der erfindungsgemäßen Empfangsschaltung schneller festgestellt. Allerdings bleibt die Reaktionszeit des gesamten Systems wie bei der bekannten Empfangsschaltung, da diese von den Timer-Parametern abhängt und diese wiederum durch das CAN-Protokoll beeinflußt sind.

In Fig. 10 ist ein Ausführungsbeispiel einer dynamischen Flipflopschaltung gezeigt, wie sie in einer erfindungsgemäßen Empfangsschaltung verwendbar ist. In dieser Figur erkennt man auf der rechten Seite die Grundelemente eines konventionellen RS-Flipflops mit zwei NAND-Gattern N13 und N14, wobei der Ausgang des Gatters N13 dem Signalausgang Q und der Ausgang des Gatters N14 dem invertierten Signalausgang QN entspricht. Im Gegensatz zu konventionellen RS-Flipflops sind zwei Setzeingänge set1, set2 und zwei Rücksetzeingänge res1, res2 vorhanden, die nicht direkt sondern über vier Impulsformerschaltungen auf die Gatter N13 und N14 führen. Eine erste dieser Impulsformerschaltungen ist mit einem RS-Flipflop mit NAND-Gattern N1, N2 und mit einem diesem nachgeschalteten NAND-Gatter N5 aufgebaut. Eine zweite dieser Impulsformerschaltungen ist mit einem RS-Flipflop mit NAND-Gattern N3, N4 und mit einem diesem nachgeschalteten NAND-Gatter N6 aufgebaut. Eine dritte dieser Impulsformerschaltungen ist mit einem RS-Flipflop mit NAND-Gattern N7, N8 und mit einem diesem nachgeschalteten NAND-Gatter N11 aufgebaut. Eine vierte dieser Impulsformerschaltungen ist mit einem RS-Flipflop mit NAND-Gattern N9, N10 und mit einem diesem nachgeschalteten NAND-Gatter N12 aufgebaut.

Von den beiden Setzeingängen set1 und set2 ist ein erster Setzeingang set1 mit einem ersten Eingang E11 der ersten Impulsformerschaltung und ein zweiter Setzeingang set2 mit einem ersten Eingang E31 der dritten Impulsformerschaltung verbunden. Von den beiden Rücksetzeingängen res1 und res2 ist ein erster Rücksetzeingang res1 mit einem ersten Eingang E41 der vierten Impulsformerschaltung und ein zweiter Rücksetzeingang res2 mit einem ersten Eingang E21 der zweiten Impulsformerschaltung verbunden. Die beiden NAND-Glieder N13 und N14 weisen je drei Eingänge auf. Von den drei Eingängen des NAND-Gatters N13 ist einer mit einem Ausgang q50 der ersten Impulsformerschaltung, ein zweiter mit einem Ausgang q70 der dritten Impulsformerschaltung und ein dritter mit einem zweiten Eingang E12 der ersten Impulsformerschaltung und mit einem zweiten Eingang E32 der dritten Impulsformerschaltung verbunden. Von den drei Eingängen des NAND-Gatters N14 ist einer mit einem Ausgang q60 der zweiten Impulsformerschaltung, ein zweiter mit einem Ausgang q80 der vierten Impulsformerschaltung und ein dritter mit einem zweiten Eingang E22 der zweiten Impulsformerschaltung und mit einem zweiten Eingang E42 der vierten Impulsformerschaltung verbunden.

Bei einer derartigen dynamischen Flipflop-Schaltung können keine undefinierten Signalzustände auftreten wie bei herkömmlichen statischen nicht-getakteten Flipflops.

## Patentansprüche

1. Empfangsschaltung für ein digitales Datenübertragungssystem mit differenzmäßiger Datenübertragung über einen Doppelleitungsbus mit einer ersten Leitung (CANH) und einer zweiten Leitung (CANL), wobei einem ersten Bitwert der übertragenen Daten ein hohes Potential auf der ersten Leitung (CANH) und ein niedriges Potential auf der zweiten Leitung (CANL) und einem zweiten Bitwert der übertragenen Daten ein niedriges Potential auf der ersten Leitung (CANH) und ein hohes Potential auf der zweiten Leitung
(CANL) zugeordnet sind; mit einem mit der ersten Leitung (CANH) verbundenen ersten Signaleingang, einem mit der zweiten Leitung (CANL) verbundenen zweiten Signaleingang und einem Signalausgang (RxD);
mit einer ersten Komparatorschaltungsanordnung (COMP1a, COMP1b) zur differentiellen Auswertung der beiden über die zwei Leitungen (CANH, CANL) jeweils empfangenen Impulssignale unter Offsetspannungsüberlagerung bezüglich des über eine (CANL) der beiden Leitungen (CANH, CANL) empfangenen Impulssignals vor der differentiellen Auswertung;
wobei die erste Komparatorschaltungsanordnung (COMP1a, COMP1b) dem zweiten Impulssignal sowohl eine positive Offsetspannung (+offset) als auch eine negative Offsetspannung (-offset) überlagert und zwei Komparatorausgänge aufweist, wobei ein erster dieser Komparatorausgänge einen ersten Logikpotentialwert dann liefert, wenn das erste Impulssignal einen höheren ersten Schwellenwert übersteigt, der dem um die positive Offsetspannung (+offset) erhöhten Potentialwert des zweiten Impulssignals entspricht, ansonsten einen zweiten Logikpotentialwert liefert, und der zweite Komparatorausgang den ersten Logikpotentialwert dann liefert, wenn das erste Impulssignal einen niedrigeren zweiten Schwellenwert übersteigt, der dem um die negative Offsetspannung (-offset) verringerten Potentialwert des zweiten Impulssignals entspricht, ansonsten den zweiten Logikpotentialwert liefert;
und wobei zwischen die Ausgänge der ersten Komparatorschaltungsanordnung und den Signalausgang (RxD) eine bistabile Kippschaltung (FF) geschaltet ist, die durch einen Übergang des ersten und/oder zweiten Komparatorausgangs in den ersten Logikpotentialwert in einen Setzzustand und durch einen Übergang des ersten und/oder zweiten Komparatorausgangs in den zweiten Loggikpotentialwert in einen Rücksetzzustand schaltbar ist.

2. Empfangsschaltung nach Anspruch 1, bei welcher
die erste Komparatorschaltungsanordnung einen ersten Komparator (COMP1a) und einen zweiten Komparator (COMP1b) aufweist, die je einen ersten Komparatoreingang (+), einen zweiten Komparatoreingang (-) und einen Komparatorausgang aufweisen, wobei deren Komparatorausgänge den ersten bzw. zweiten Komparatorausgang der ersten Komparatorschaltungsanordnung bilden,
und die zweiten Komparatoreingänge (-) je mit der ersten Leitung (CANH) gekoppelt sind und die ersten Komparatoreingänge (+) unter Zwischenschaltung einer die positive Offsetspannung (+offset) liefernden ersten Offsetspannungsquelle (Voffset1) bzw. einer die negative Offsetspannung (-offset) liefernden zweiten Offsetspannungsquelle (Voffset2) je mit der zweiten Leitung (CANL) gekoppelt sind.

3. Empfangsschaltung nach Anspruch 2, bei welcher
die bistabile Kippschaltung (FF) durch ein dynamisches RS-Flipflop mit zwei auf Flankenanstieg reagierenden Setzeingängen (S1, S2) und zwei auf Flankenabfall reagierenden Rücksetzeingängen (R1, R2) gebildet ist,
wobei einer (S1) der beiden Setzeingänge (S1, S2) und einer (R1) der beiden Rücksetzeingänge (R1, R2) je mit dem Ausgang des ersten Komparators (COMP1a) und der zweite Setzeingang (S2) und der zweite Rücksetzeingang (R2) mit dem Ausgang des zweiten Komparators (COMP1b) verbunden sind.

4. Empfangsschaltung nach Anspruch 1, 2 oder 3,
mit einer zweiten Komparatorschaltungsanordnung (COMP2 - Comp5), mittels welcher
das elektrische Potential der ersten Leitung (CANH) auf Überschreiten eines einem ersten Logikwert entsprechenden hohen ersten Potentialschwellenwertes (+5V) überwacht und bei dessen Überschreitung ein erstes Potentialüberschreitungssignal erzeugt wird; das elektrische Potential der zweiten Leitung (CANL) auf Überschreiten des ersten Potentialschwellenwertes (+5V) überwacht und bei dessen Überschreitung ein zweites Potentialüberschreitungssignal erzeugt wird;
das elektrische Potential der ersten Leitung (CANH) auf Überschreiten eines zwischen dem Potentialwert des ersten Logikwertes und einem Potentialwert eines niedrigen zweiten Logikwertes liegenden zweiten Potentialschwellenwertes (+2,8V) überwacht wird; und das elektrische Potential der zweiten Leitung (CANL) auf Unterschreiten des zweiten Potentialschwellenwertes (+2,8V) überwacht wird;
und mit einer Umschalteinrichtung (SW), welche den Signalausgang (RxD) dann, wenn weder das erste noch das zweite Potentialüberschreitungssignal erzeugt wird, mit einer Ausgangsseite der ersten Komparatorschaltungsanordnung (COMP1a, COMP1b) koppelt, und welche den Signalausgang (RxD) dann, wenn entweder das erste oder das zweite Potentialüberschreitungssignal erzeugt wird, mit einer Ausgangsseite der zweiten Komparatorschaltungsanordnung koppelt.

5. Empfangsschaltung nach Anspruch 4, bei welcher
die zweite Komparatorschaltungsanordnung aufweist: einen dritten Komparator (COMP2), mittels welchem das elektrische Potential der ersten Leitung (CANH) auf Überschreiten des ersten Potentialschwellenwertes (+5V) überwacht wird;
einen vierten Komparator (COMP3), mittels welchem das elektrische Potential der zweiten Leitung (CANL) auf Überschreiten des ersten Potentialschwellenwertes (+5V) überwacht wird;
einen fünften Komparator (COMP4), mittels welchem das elektrische Potential der ersten Leitung (CANH) auf Überschreiten des zweiten Potentialschwellenwertes (+2,8V) überwacht wird; und einen sechsten Komparator (COMP5), mittels welchem das elektrische Potential der zweiten Leitung (CANL) auf Unterschreiten des zweiten Potentialschwellenwertes (+2,8V) überwacht wird;
wobei die Umschalteinrichtung (SW) den Signalausgang (RxD) dann, wenn weder das erste noch das zweite Potentialüberschreitungssignal erzeugt wird, mit dem Ausgang der ersten Komparatorschaltungsanordnung (COMP1a, COMP1b) koppelt, und den Signalausgang (RxD) dann, wenn entweder das erste oder das zweite Potentialüberschreitungssignal erzeugt wird, mit dem Ausgang des sechsten (COMP5) bzw. des fünften (COMP4) Komparators koppelt.

6. Empfangsschaltung nach Anspruch 5, bei welcher
zwischen den Ausgängen von drittem und viertem Komparator (COMP2, COMP3) und der Umschalteinrichtung (SW) eine Multiplexsteuerlogikschaltung (MUX) angeordnet ist.

7. Empfangsschaltung nach Anspruch 6, bei welcher
die Multiplexsteuerlogikschaltung (MUX) unter der Steuerung durch einen Timer (T) steht, der einen Steuereingang (SE) aufweist, der an den Ausgang einer NAND-Verknüpfungsschaltung (NAND) angeschlossen ist, die einen direkt an den Ausgang des ersten Komparators (COMP1a) angeschlossenen ersten NAND-Eingang und einen über einen Inverter (INV) an den Ausgang des zweiten Komparators (COMP1b) angeschlossenen zweiten NAND-Eingang aufweist.

8. Empfangsschaltung nach Anspruch 6 oder 7, bei welcher
die Umschalteinrichtung (SW) einen mit einem Ausgang der bistabilen Kippschaltung (FF) verbundenen ersten Eingang, einen mit einem Ausgang des fünften Komparators (COMP4) verbundenen zweiten Eingang und einen mit einem Ausgang des sechsten Komparators (COMP5) verbundenen dritten Eingang aufweist und die Umschaltung zwischen diesen drei Eingängen mittels der Multiplexsteuerlogikschaltung (MUX) steuerbar ist.
